Europäisches Patentamt

**European Patent Office**

**Office européen des brevets**

(11) Publication number: **0 089 776**
**A1**

## (12) EUROPEAN PATENT APPLICATION

(21) Application number: **83301256.0**

(22) Date of filing: **08.03.83**

(51) Int. Cl.³: **B 60 R 21/10**
**B 60 N 1/12, A 44 B 11/25**

(30) Priority: **17.03.82 GB 8207829**

(43) Date of publication of application:
**28.09.83 Bulletin 83/39**

(84) Designated Contracting States:
**AT CH DE FR GB IT LI NL SE**

(71) Applicant: **KANGOL MAGNET LIMITED**
**Norfolk Street**
**Carlisle Cumbria CA2 5HX(GB)**

(72) Inventor: **Anderson, Alexander Barrie**
**7 Lazonby Terrace**
**Carlisle Cumbria(GB)**

(74) Representative: **Jones, Ian et al,**
**POLLAK MERCER & TENCH High Holborn House 52-54**
**High Holborn**
**London WC1V 6RY(GB)**

(54) Securement device.

(57) It comprises a stud part (4) releasably connectible to a second part (12) by progressive insertion of the stud part into overlapping apertures (19, 24) of two relatively slidable members (14, 22) of the second part to cause relative sliding against a bias provided by integral spring arms (26) on one of the members until the bias causes one of members to engage in a recess in the stud part. The stud part can extend from the shell (2) of a child's safety seat and the second part can be connected to a strap (1) for securing the safety seat in a vehicle.

FIG.1.

Croydon Printing Company Ltd.

EP 0 089 776 A1

SECUREMENT DEVICE

DESCRIPTION

The invention relates to a securement device
particularly but not exclusively for use for securing
a child's safety seat in a vehicle

For safety reasons, very young children are best
carried in a road vehicle in a special safety seat
usually received on a rear vehicle seat.   Such a
child's safety seat is disclosed for example in GB
1 546 772.   Securement is conveniently effected by
means of straps extending between vehicle anchorage
positions and the seat.   The seat must be securely
held in place but it must be easily removable from the
vehicle and replaceable within it.   The present
invention is concerned with the provision of a securement device capable of affording a connection between
a mounting strap or belt and a child's safety seat
or between other members, which is strong and reliable
but which can be quickly and conveniently made and
unmade as required.

The invention accordingly provides a securement
device comprising a first part having a tapering free
end and a formation spaced therefrom, and a second
part having first and second elements having
respective first and second holes, the elements being
arranged for relative movement against a bias by
insertion of the first part in the holes of the
second part elements in a _____

direction transverse to the direction of movement of the elements to permit continued insertion of the first part until one of the elements engages the formation in response to the bias to releasably latch the first and second parts together.

The bias is preferably provided by spring means formed integrally with one of the elements of the first connector part. Thus one of the elements can be moulded in plastics material with an integral portion capable of acting as a spring, the other being a metal element on which the other is slidably guided.

Also in accordance with the invention, the spring bias is provided by a spring means acting between one ·of the elements of the first connector part and a snubber bar around which a strap is entrained. Where the device is for securement of a child's seat within a vehicle, the second connector part can be carried by the seat and the strap can extend to a vehicle anchorage position.

The second connector part preferably comprises an elongate member, with a narrow neck portion, which can be received in an aperture through the elements of the second part, the aperture being restricted in the latching position to trap the neck portion but being enlarged in the release position to permit escape, and also entry of the member. The member advantageously has a tapered free end which causes relative sliding of the elements of the first connector part to the release position on entry of the member into the aperture. The advantages of the invention are to be seen in the simplicity of construction, and in the reliability and ease of use, of attachment devices embodying it.

For a better understanding of the invention, reference may be made to the following illustrative description, and the accompanying drawing, in which:

Figure 1 is an exploded perspective view of one part of a quick release securement device embodying the invention;

Figure 2 is a plan view of the part of Figure 1 in operative association with a length of belt or webbing and in a latched or connected condition;

Figure 3 is a similar view of the part of Figure 1 but in a release position;

Figure 4 is a perspective view of a second part of the device, in the form of a stud;  and

Figures 5 and 6 are sectional fragmentary side views of the device in respectively the latched and the release positions.

The illustrated securement device is intended primarily  to enable a child's safety seat for use in a vehicle to be conveniently connected to and disconnected from a length of strap or webbing 1 by which the safety seat is secured in place in a vehicle, typically on a back seat of the vehicle.

The child's safety seat may be of the kind disclosed in GB 1 546 772 or may have other suitable form.   As herein illustrated, the safety seat comprises a shell 2 of rigid plastics material having a first securement device part in the form of a stud 4 secured to it, by means of a bolt 5 or other fastener, to project outwardly from the shell.   The stud 4 has a short cylindrical base portion 6 against the shell 2. A shorter cylindrical portion or neck 8 of smaller diameter extends concentrically outwardly from the base portion 6 to a generally conical free end portion 10, with a rounded apex and a diameter adjacent the neck intermediate between that of the neck and the base portion.

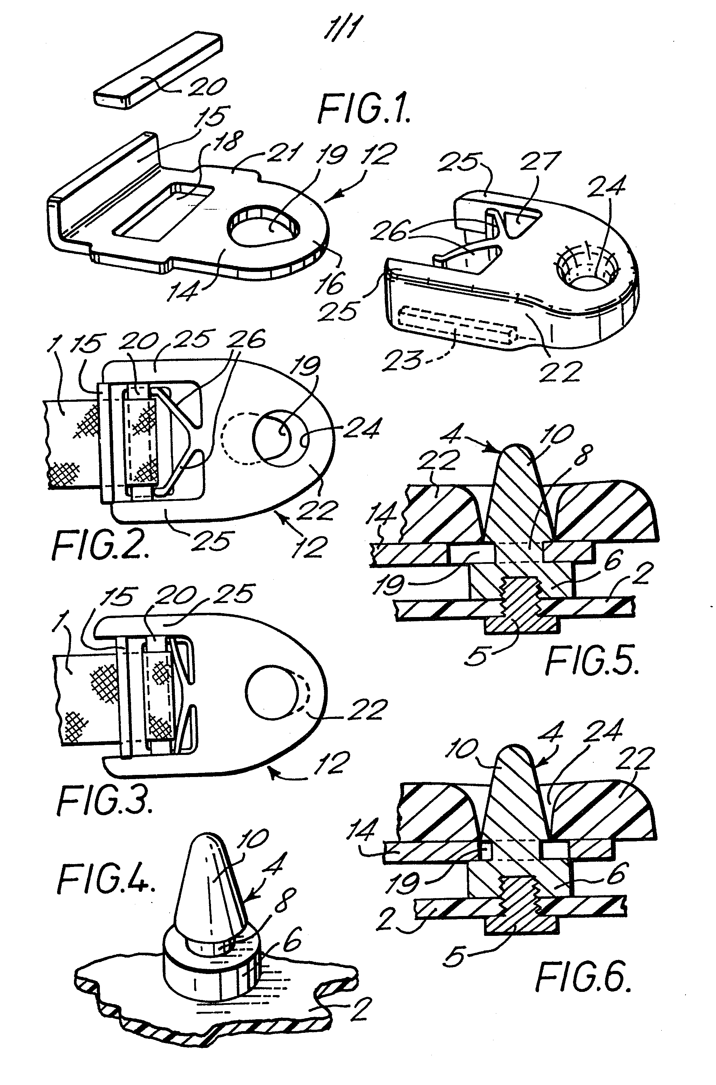

The securement device of the invention also comprises a part 12 co-operable with the stud 4 and having the elements shown in Figure 1.   These elements comprise a frame in the form of a base plate 14 having at one end a portion 15 upturned through 90°.   The base plate 14 has parallel side edges and a rounded end 16 remote from the portion 15. The base plate 14 also has an elongate transverse slot 18 adjacent the upturned end portion 15 and within the rounded end 16, a pear-shaped aperture 19. A second element of the part 12 comprises a snubber part 20. Connection is made between the part 12 and the belt or webbing 1 by reception of a loop of the webbing through the slot 18 from the underside as shown, the snubber bar 20 being received through the loop on the upper side of the base plate 14 and being of such a shape that it cannot be pulled through the slot.

The part 12 also comprises a cover 22 which is slidably guided on the base plate side edges by means of projecting side edges portions 21 received in slots 23 in lower guide portions of the cover. The slots 23 are longer than the edge portions 21, so as to limit movement of the cover 22 on the base plate 14 to the right, as shown, to an end position shown in Figure 2. The side edge portions and slots permit the cover 22 and base plate 14 to be assembled together by resilient deformation of the former. In plan, the cover 22 generally resembles the base plate 14, so as to have a curved end, in which the cover has a circular aperture 24.

At its other end, the cover 22 has a generally rectangular recess formed between two limbs 25 between which the snubber bar and the base plate portion 15 can be received. Extending between the snubber bar 20 and the inner wall of the cover recess are spring means in the form of a pair of arms 26 diverging from the centre region of the recess inner wall outwardly toward the ends of the snubber bar. The cover 22 is made of plastics material and the spring arms 26 are formed integrally with the rest of the cover.

Before connection with the stud 4, the part 12 has the condition shown in Figure 2, in which the spring arms 26 act on the snubber bar 20 to urge the cover 22 away from the base plate upturned end portion 15 to the end position. In this position, the cover aperture 24 intersects the base plate aperture 19 so that only the narrow end portion of the latter is exposed through the cover aperture.

Connection to the stud 4 is effected by locating the underside of the base plate 14 against the stud with the conical free end portion 10 projecting into the narrow apertures 19 and 24. The end portion 10 cannot enter far into the apertures at this time but pressure on the cover downward onto the stud 4 causes relative sliding movement of the cover and the base plate, against the force of the spring arms 26, to the position of Figures 3 and 6 in which the cover aperture 24 registers with the large diameter end of the base plate aperture 19. The free ends of the spring arms 26 then extend into recesses 27 provided in the limbs 25 to receive them. The fixing stud 4 can then enter fully, that is, until its base portion 6 engages the underside of the base plate 14, as shown in Figure 6. As soon as the underside of the conical portion 10 has gone beyond the upper surface of the plate 14, the smaller diameter neck 8 permits the spring arms 26 to move the base plate 14 relative to the stud and cover 22 back to the position of Figures 2 and 5, so that the neck 8 is trapped in the narrow end of the base plate aperture 19. The stud 4 and part 12 are thus securely latched together so as to resist separating forces.

Release of the part 12 from the stud 4 can be readily effected by sliding the base plate 14 relative to the cover 22, against the force of the spring arms 26 to restore the position of Figure 6, so that the part 12 can be lifted off the stud. The base plate 14 is provided with the portion 15 to enable it to be readily engaged, for example, by the thumb, whilst the fingers engage the curved end of the cover 22.

The invention can be embodied in a variety of ways other than as specifically described and will be understood to have applications other than as particularly described. The part 12 need not be employed as a connector to a further member such as the webbing 1, the snubber bar 20 being then omitted and the spring arms 26 arranged to act for example on the portion 15. This part can then be employed to releasably retain one or more members on the stud part. For example, a cover plate or inspection panel can be held in position over an opening in a wall from which the stud parts extend, or a plurality of apertured brackets or D-rings, from which belts extend, can be received on the stud part, and releasably connected together or to a member from which the stud part projects.

CLAIMS

1. A securement device comprising first and second releasably connectible parts (12,4), the first part (12) having two elements (14,20) arranged for relative movement against a biassing means (26) to a release position in which the second part can enter and leave overlapping holes (19,24) in the elements from a securement position in which the overlapped area of the holes is such as to retain the first part in the holes.

2. A securement device as claimed in claim 1 wherein a first of the first part elements is a plate element (14) engageable in a recess in the second part (4) and slidably mounting the second element (22).

3. A securement device as claimed in claim 2 wherein the second element (22) is of plastics material making a snap fit mounting on the plate element for sliding between limits set by interengaging formations (21,23) on the two elements.

4. A securement device as claimed in claim 2 or 3 wherein the plate element (14) has a slot (18) and a snubber bar (20) for connection to an elongate flexible member.

5. A securement device as claimed in claim 4 wherein the biassing means comprises spring arm means (26) formed integrally with the second element (22) and bearing on the plate element by engagement with the snubber bar (20).

6. A securement device as claimed in claim 1, 2, 3 or 4 wherein the biassing means (26) is an integrally formed part of one of the elements.

7. A securement device as claimed in any one of claims 2 to 6 wherein the second part (4) has a tapered free end (10) arranged on insertion into the holes to move the elements to the release position against the biassing means (26).

8. A securement device having first and second releasably connectible parts, the first part (22) having a recess (24) into which the second part (4) can be inserted and a latch member (14) movable between a latching position engaging a latch formation (8) of the first part to prevent withdrawal thereof from the recess and a release position permitting such withdrawal, and spring means (26) biassing the latch member to the latching position, the spring means (26) and the first part (22) being integrally formed.

9. A securement device as claimed in claim 8 wherein the latch member (14) is slidable relative to the first part (22) between the latching and release positions in a direction transverse to the direction of insertion of the second part (4) into the recess (24), the latch member having an aperture (19) through which the second part extends when inserted into the recess, latching being effected by reception of a portion of the latch member at the edge of the aperture into the latch formation (8).

10. A securement device as claimed in claim 9 wherein the second part has an annular groove (8) constituting the latch formation spaced from a tapered free end (10) shaped to cause relative sliding of the latch member (14) and the first part (22) to the release position on insertion of the second part into the recess.

0089776

1/1

FIG.1.

FIG.2.

FIG.3.

FIG.4.

FIG.5.

FIG.6.

European Patent
Office

**EUROPEAN SEARCH REPORT**

**0089776**
Application number

EP 83 30 1256

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 348 716 (D.F.A.) <br><br> * Figure 7, related text * <br><br> --- | 1,2,4, 8,9 | B 60 R 21/10 <br> B 60 N 1/12 <br> A 44 B 11/25 |
| X | FR-A-1 557 626 (IRVING) <br><br> * Whole document * <br><br> --- | 1,2,4, 5,7-10 | |
| Y | FR-A-2 190 005 (HERLAG) <br> * Figures 1-6, related text * <br><br> --- | 1 | |
| Y | AU-B- 499 905 (REPCO) <br> * Whole document * <br><br> --- | 1 | |
| D,A | DE-A-2 623 102 (KANGOL) <br><br> ----- | | |

**TECHNICAL FIELDS SEARCHED (Int. Cl. 3)**

B 60 R
B 60 N
A 44 B

The present search report has been drawn up for all claims

| Place of search <br> THE HAGUE | Date of completion of the search <br> 22-06-1983 | Examiner <br> HEROUAN E. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82